# EUROPÄISCHE PATENTSCHRIFT

(11) **EP 1 794 579 B1**
(45) Veröffentlichungstag und Bekanntmachung des Hinweises auf die Patenterteilung: **20.01.2010**
(21) Anmeldenummer: 05773871.8
(22) Anmeldetag: 02.08.2005
(51) Int. Cl.: G01N 27/00, C23C 14/08

(54) **PIEZOAKUSTISCHER DÜNNFILMRESONATOR MIT KRISTALLINER ZINKOXIDSCHICHT**
PIEZO-ACOUSTIC THIN FILM RESONATOR HAVING A CRYSTALLINE ZINC OXIDE LAYER
RÉSONATEUR PIÉZOÉLECTRIQUE À COUCHE MINCE UTILISANT UNE COUCHE CRISTALLINE D'OXYDE DE ZINC

(30) Priorität: 28.09.2004 DE 102004047023
(43) Veröffentlichungstag der Anmeldung: 13.06.2007
(73) Patentinhaber: SIEMENS AKTIENGESELLSCHAFT, 80333 München (DE)
(72) Erfinder: GABL, Reinhard, A-8542 St. Peter um Sulmtal (AT); LINK, Mathias, 80801 München (DE); SCHREITER, Matthias, 81379 München (DE)
(86) Internationale Anmeldenummer: PCT/EP2005/053753
(87) Internationale Veröffentlichungsnummer: WO 2006/034906

(56) Entgegenhaltungen:
- WO-A-2004/017063
- YAMADA H ET AL: "Improvement of crystallinity of ZnO thin film and electrical characteristics of film bulk acoustic wave resonator by using Pt buffer layer" VACUUM ELSEVIER UK, Bd. 74, Nr. 3-4, 7. Juni 2004 (2004-06-07), Seiten 689-692, XP002352544 ISSN: 0042-207X
- WANG J S ET AL: "SPUTTERED C-AXIS INCLINED PIEZOELECTRIC FILMS AND SHEAR WAVE RESONATORS" PROCEEDINGS OF THE ANNUAL FREQUENCY CONTROL SYMPOSIUM. PHILADELPHIA, JUNE 1 - 3, 1983. JUNE 1 - 3, 1983, NEW YORK, IEEE, US, Bd. SYMP. 37, 1. Juni 1983 (1983-06-01), Seiten 144-150, XP000647259
- YOSHINO Y ET AL: "Transmission electron microscopy study of interface microstructure in ZnO thin films grown on various substrates (glass, Au, Al, alpha Al2O3)" MATER RES SOC SYMP PROC; MATERIALS RESEARCH SOCIETY SYMPOSIUM PROCEEDINGS; THIN FILMS - STRUCTURE AND MORPHOLOGY 1997 MATERIALS RESEARCH SOCIETY, PITTSBURGH, PA, USA, Bd. 441, 2. Dezember 1996 (1996-12-02), Seiten 241-246, XP008055125
- GABL R ET AL: "First results on label-free detection of DNA and protein molecules using a novel integrated sensor technology based on gravimetric detection principles" BIOSENSORS & BIOELECTRONICS, ELSEVIER SCIENCE PUBLISHERS, BARKING, GB, Bd. 19, Nr. 6, 11. September 2003 (2003-09-11), Seiten 615-620, XP002320316 ISSN: 0956-5663

## Beschreibung

Die Erfindung betrifft eine Kondensatorstruktur zur Bildung eines piezoakustischen Resonators mit einer auf einem Substrat angeordneten unteren Elektrodenschicht, einer oberen Elektrodenschicht und einer zwischen den Elektrodenschichten angeordneten, kristallinen dielektrischen Schicht mit Zinkoxid. Daneben werden ein Verfahren zum Herstellen der Kondensatorstruktur und eine Verwendung der Kondensatorstruktur angegeben.

Eine Kondensatorstruktur mit dem beschriebenen Schichtaufbau ist beispielsweise aus der WO 2004/017063 A2 oder der Veröffentlichung Yamada H. et al., Improvement of crystallinity of ZnO thin film and electrical characteristics of film bulk acoustic wave resonator by using Pt buffer layer, vaccuum 74 (2004), S. 689- 692 bekannt. Die Kondensatorstruktur (Dünnschichtkondensator) bildet einen piezoakustischen Dünnfilmresonator (Film Bulk Acoustic Resonator, FBAR). Die kristalline dielektrische Schicht ist eine polykristalline Schicht aus Zinkoxid (ZnO). Diese Schicht bildet eine piezoelektrische Schicht des Resonators. Die Elektrodenschichten sind beispielsweise aus Platin oder aus Aluminium, das mit Platin beschichtet ist. Die. Elektrodenschichten und die piezoelektrische Schicht sind derart aneinander angeordnet, dass eine elektrische Ansteuerung der Elektrodenschichten mit einem elektrischen Wechselfeld zu einer Schwingung des Resonators mit einer Resonanzfrequenz führt. Die Resonanzfrequenz der Schwingung hängt von den Schichtdicken der Schichten der Kondensatorstruktur ab. Welche Schwingungsmode (Longitudinaldickenschwingung oder Scherdickenschwingung) angeregt wird, hängt von einer Kristallstruktur der Zinkoxid-Einkristalle und einer relativen Ausrichtung der Zinkoxid-Einkristalle zum angelegten elektrischen Wechselfeld ab.

Zum Erzeugen der Schichten der Kondensatorstruktur auf einem Substrat, beispielsweise einem Siliziumsubstrat, wird ein Dampfabscheideverfahren durchgeführt. Dabei wird zunächst die untere Elektrodenschicht, beispielsweise aus polykristallinem Platin, auf dem Siliziumsubstrat abgeschieden. Auf die untere Elektrodenschicht aus Platin wird Zinkoxid abgeschieden. Ohne zusätzliche Maßnahmen wachsen Zinkoxid-Einkristalle mit einer (002)-Orientierung auf. Dies bedeutet, dass die polare c-Achse des Zinkoxids senkrecht zur Substratoberfläche bzw. zur Elektrodenoberfläche orientiert ist. Damit lässt sich der resultierende Resonator optimal zu Longitudinaldickenschwingungen anregen.

Der aus der aus der WO 2004/017063 A2 bekannte Resonator wird zur Detektion einer Substanz eines Fluids eingesetzt. Dazu wird das Fluid an einem Oberflächenabschnitt des Resonators vorbeigeleitetet, wobei die zu detektierende Substanz am Oberflächenabschnitt sorbiert wird. Aufgrund der Sorption kommt es zu einer Änderung einer Masse des Resonators und damit zu einer Änderung der Resonanzfrequenz des Resonators.

Soll ein Fluid in Form einer Flüssigkeit untersucht werden, und soll die Resonanzfrequenz des Resonators während des Vorbeileitens des Fluids bestimmt werden, ist es besonders vorteilhaft, den bekannten Resonator zu Scherdickenschwingungen anregen zu können. Dickenschwerschwingungen werden durch das Fluid nahezu nicht gedämpft, was zu einer im Vergleich zu Longitudinaldickenschwingungen zu einer relativ hohen Güte des Resonators und damit zu einer relativ hohen Detektierbarkeit für die Substanz des Fluids führt. Das beschriebene Herstellverfahren führt zu einer (002)-Orientierung der Zinkoxid-Einkristalle. Um einen Resonator zu erhalten, der zu Scherdickenschwingungen angeregt werden kann, müssen die Zinkoxid-Einkristalle verkippt aufwachsen. Aus der WO 2004/017063 A2 geht nicht hervor, wie dies erreicht werden kann. Ein Resonator mit verkippten Kristallen wird von Wang et al. beschrieben, in Proceedings of the Annual Frequency Control Symposium, Band 37 (1983), Seiten 144 - 150. Aufgabe der vorliegenden Erfindung ist es, aufzuzeigen, wie eine Kondensatorstruktur für einen Dünnfilmresonator erhalten wird, der zu Scherdickenschwingungen angeregt werden kann.

Zur Lösung der Aufgabe wird eine Kondensatorstruktur zur Bildung eines piezoakustischen Resonators mit einer auf einer Substratoberfläche eines Substrats angeordneten unteren Elektrodenschicht, einer oberen Elektrodenschicht und einer zwischen den Elektrodenschichten angeordneten, kristallinen dielektrischen Schicht mit Zinkoxid angegeben, die eine Vielzahl von Zinkoxid-Einkristallen mit jeweils einer polaren Kristallachse aufweist. Dabei ist zwischen der unteren Elektrodenschicht und der kristallinen dielektrischen Schicht mit Zinkoxid eine amorphe dielektrische Zwischenschicht angeordnet und die polaren Kristallachsen der Zinkoxid-Einkristalle der dielektrischen Schicht sind gegen die substratoberfläche verkippt. Die Kondensatorstruktur ist **dadurch gekennzeichnet, dass** die zwischenschicht eine aus dem Bereich von einschließlich 20 nm bis einschließlich 500 nm ausgewählte Zwischenschichtdicke aufweist.

Zur Lösung der Aufgabe wird auch ein Verfahren zum Herstellen der Kondensatorstruktur nach einem der vorangegangenen Ansprüche mit den Verfahrensschritten angegeben: a) Bereitstellen des substrats, b) Erzeugen der unteren Elektrodenschicht auf einer Substratoberfläche des Substrats, c) Erzeugen der amorphen Zwischenschicht auf der unteren Elektrodenschicht, d) Erzeugen der kristallinen dielektrischen Schicht mit Zinkoxid auf der Zwischenschicht und e) Erzeugen der oberen Elektrodenschicht auf der kristallinen dielektrischen Schicht mit Zinkoxid.

Gemäß eines weiteren Aspekts der Erfindung wird eine Verwendung der Kondensatorstruktur als piezoakustischer Resonator angegeben. Dabei bildet die kristalline dielektrische Schicht mit Zinkoxid eine piezoelektrische Schicht des Resonators. Die piezoelektrische Schicht und die Elektrodenschichten werden derart aneinander angeordnet, dass eine elektrische Ansteuerung der Elektrodenschichten zu einer Schwingung des Resonators mit einer bestimmten Resonanzfrequenz führt.

Zum Erzeugen der unteren Elektrodenschicht, der amorphen Zwischenschicht, der kristallinen dielektrischen Schicht mit Zinkoxid und/oder der oberen Elektrodenschicht wird bevorzugt ein Abscheiden aus einer Dampfphase durchgeführt. Das Abscheiden aus der Dampfphase kann ein physikalisches Dampfabscheiden (Physical Vapour Deposition, PVD) oder ein chemisches Dampfabscheiden (Chemical Vapour Deposition, CVD) umfassen. Ein derartiges Verfahren ist beispielsweise ein reaktives Sputtern, mit dem der Zinkoxidfilm abgeschieden wird.

Gemäß der vorliegenden Erfindung wird auf der unteren Elektrodenschicht, die beispielsweise aus Platin besteht, eine amorphe Zwischenschicht abgeschieden. Diese Zwischenschicht ermöglicht es, während des Erzeugens der dielektrischen Schicht aus Zinkoxid ein elektrisches Feld derart zu erzeugen, dass laterale Feldkomponenten an der Substratoberfläche bzw. an der unteren Elektrodenschicht auftreten. Aufgrund der lateralen Feldkomponenten wird Zinkoxid verkippt auf der unteren Elektrodenschicht abgeschieden. In einer besonderen Ausgestaltung des Verfahrens wird daher zum Erzeugen der kristallinen dielektrischen Schicht ein Abscheiden von Zinkoxid aus der Dampfphase durchgeführt und während des Abscheidens des Zinkoxids ein elektrisches Feld erzeugt, das laterale Feldkomponenten bezüglich der Substratoberfläche des Substrats aufweist. Ohne die dielektrische Zwischenschicht würden durch die elektrische Ansteuerung der unteren Elektrode während des Abscheidens nur Feldkomponenten auftreten, die zur Substratoberfläche im Wesentlichen senkrecht orientiert sind.

Dadurch, dass die Zwischenschicht amorph ist, erfolgt zudem kein epitaktisches Aufwachsen der Zinkoxid-Einkristalle. Es ist keine Vorzugsrichtung des Aufwachsens der Zinkoxid-Einkristalle vorgegeben. Somit kann die Verkippung der aufwachsenden Zinkoxid-Einkristalle beliebig eingestellt werden.

Durch die amorphe Zwischenschicht ist eine Verkippung der polaren Kristallachse des Zinkoxids zugänglich. So kann bei einer Verkippung von 40° oder 90° der Resonator zu reinen Scherdickenschwingungen angeregt werden. Aber auch bei einer geringer ausfallenden Verkippung, beispielsweise bei einer Verkippung von 16° resultiert ein Resonator, der zu Scherdickenschwingungen angeregt werden kann und der eine genügend hohe Detektivität auch in Gegenwart eines zu untersuchenden Fluids aufweist.

Als Material der Zwischenschicht ist jedes beliebige anorganische oder organische Material denkbar. In einer besonderen Ausgestaltung weist die Zwischenschicht zumindest ein aus der Gruppe Aluminiumoxid (Al₂O₃), Siliziumdioxid (SiO₂), Titandioxid (TiO₂) und/oder Zirkoniumdioxid (ZrO₂) ausgewähltes keramisches Material auf. Als besonders vorteilhaft hat sich Aluminiumoxid herausgestellt.

In einer besonderen Ausgestaltung ist die Zwischenschichtdicke aus dem Bereich von 50 nm bis 200 nm ausgewählt. Diese Zwischenschichtdicken reichen aus, um eine Verkippung der Zinkoxid-Einkristalle zu erzielen. Gleichzeitig ist eine Kondensatorstruktur zugänglich, die als piezoakustischer Resonator über eine genügend hohe Massensensitivität verfügt.

In einer besonderen Ausgestaltung weist die kristalline dielektrische Schicht mit Zinkoxid eine aus dem Bereich von einschließlich 0,1 µm bis einschließlich 20 µm ausgewählte Schichtdicke auf. Vorzugsweise wird die Resonanzfrequenz der Schwingung des mit der Kondensatorstruktur realisierten Resonators aus dem Bereich von einschließlich 500 MHz bis einschließlich 10 GHz ausgewählt. Durch diese Maßnahmen resultiert eine besonders hohe Massensensitivität gegenüber der Substanz.

Als Elektrodenmaterial der unteren Elektrodenschicht ist jedes beliebige Elektrodenmaterial denkbar. In einer besonderen Ausgestaltung weist die untere Elektrodenschicht ein aus der Gruppe Wolfram und/oder Platin ausgewähltes Elektrodenmaterial auf. Diese Elektrodenmaterialien haben sich bei der Verwendung von Halbleitersubstraten bewährt.

Als Elektrodenmaterial der oberen Elektrodenschicht ist ebenfalls jedes beliebige Elektrodenmaterial denkbar. Besonders vorteilhaft ist es, das Elektrodenmaterial der oberen Elektrode aus der Gruppe Aluminium und/oder Gold auszuwählen. Insbesondere bei der Verwendung von Gold ist es möglich, die obere Elektrodenschicht als chemisch sensitive Beschichtung zur Sorption des Substanz des Fluids zu verwenden. Beispielsweise verfügt die Substanz über Schwefelatome. Dadurch können sich Schwefel-Gold-Bindungen ausbilden, so dass die Substanz sorbiert wird.

Als Substrat (Trägerkörper der Kondensatorstruktur) ist jedes beliebige Substrat denkbar. Vorzugsweise ist das Substrat ein Halbleitersubstrat mit einem Halbleitermaterial. Insbesondere ist das Halbleitermaterial aus der Gruppe Silizium und/oder Galliumarsenid ausgewählt. Das Substrat kann dabei einkristallin oder polykristallin sein. Die genannten Halbleitermaterialien eignen sich zur Anwendung von Bipolar- und CMOS (Complementary Metal Oxide Semiconductor)-Technologie zur Integration von Ansteuerungs- und/oder Auswerteeinrichtungen des Resonators.

Vorzugsweise ist mindestens eine Einrichtung zur akustischen Isolation der Kondensatorstruktur und des Substrats vorhanden. Die Kondensatorstruktur bzw. der Resonator und das Substrat sind akustisch voneinander isoliert. Durch die akustische Isolation ist gewährleistet, dass die Resonanzfrequenz des Resonators unabhängig vom Substrat ist. Es resultiert eine relativ hohe Massensensitivität. Die Einrichtung zur akustischen Isolation ist beispielsweise ein Bragg-Reflektor, der aus λ/4-dicken Schichten unterschiedlicher akustischer Impedanz besteht. Alternativ dazu wird die Einrichtung durch einen Hohlraum im Substrat gebildet.

Die Kondensatorstruktur wird insbesondere zur Detektion einer Substanz eines Fluids eingesetzt. Das Fluid kann gasförmig sein. Vorzugsweise ist das Fluid eine Flüssigkeit. Zur Detektion der Substanz werden folgende Verfahrensschritte durchgeführt: a) Zusammenbringen des Fluids und des piezoakustischen Resonators derart, dass die Substanz am Oberflächenabschnitt des Resonators sorbiert werden kann und b) Bestimmen einer Resonanzfrequenz des Resonators, wobei aus der Resonanzfrequenz auf die am Oberflächenabschnitt sorbierte Menge der Substanz geschlossen wird. Dabei wird ein Oberflächenabschnitt zur Sorption einer Substanz eines Fluids derart am Resonator angeordnet, dass die Resonanzfrequenz des Resonators abhängig ist von einer am Oberflächenabschnitt sorbierten Menge der Substanz. Der Oberflächenabschnitt kann dabei von der oberen Elektrodenschicht gebildet werden, beispielsweise eine Elektrodenschicht aus Gold (siehe oben). Insbesondere ist auch die Bildung des Oberflächenabschnitts durch eine chemisch sensitive Beschichtung des Resonators denkbar.

Die Bestimmung der Resonanzfrequenz kann nach erfolgter Sorption in Abwesenheit des Fluids erfolgen. Da mit der Erfindung ein Resonator zugänglich ist, der zu Scherdickenschwingungen angeregt werden kann, erfolgt die Bestimmung der Resonanzfrequenz bevorzugt in Gegenwart des Fluids.

Zusammenfassend ergeben sich mit der Erfindung folgende wesentlichen Vorteile:
- Die zusätzliche dielektrische amorphe Zwischenschicht ermöglicht laterale Feldkomponenten während des Abscheidens der Zinkoxid-Schicht. Dadurch ist die Abscheidung von verkipptem Zinkoxid möglich.
- Durch die amorphe Zwischenschicht ist keine Vorzugsrichtung für das Aufwachsen der Zinkoxid-Einkristalle vorgegeben.
- Eine dielektrische Schicht mit verkipptem Zinkoxid ist nahezu unabhängig vom Elektrodenmaterial der unteren Elektrodenschicht erhältlich. So muss beispielsweise bei der Wahl des Elektrodenmaterials der unteren Elektrodenschicht keine Anpassung einer Gitterkonstante bzgl. des Elektrodenmaterials berücksichtigt werden.
- Durch den Zinkoxid-Film mit den verkippten Zinkoxid-Einkristallen ist auf einfache Weise ein akustischer Resonator zugänglich, der zu Scherdickenschwingungen angeregt werden kann.

Anhand mehrerer Ausführungsbeispiele und der dazugehörigen Figuren wird die Erfindung im Folgenden näher erläutert. Die Figuren sind schematisch und stellen keine maßstabsgetreuen Abbildungen dar.
Figur 1 zeigt eine Kondensatorstruktur aus einem Zinkoxidfilm auf einer Substratoberfläche eines Substrats im Querschnitt von der Seite.
Figur 2 zeigt ein Verfahren zum Herstellen des Zinkoxid Films.
Figur 3 zeigt ein Verfahren zum Detektieren einer Substanz.

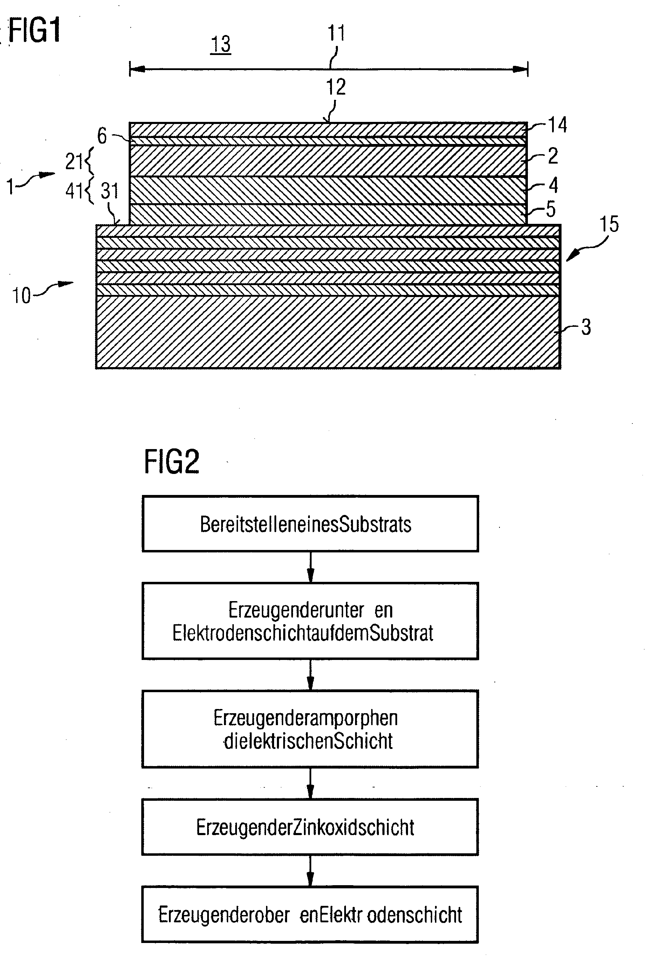

Gegeben ist eine Kondensatorstruktur 1 mit einer kristallinen dielektrischen Schicht aus polykristallinem Zinkoxid (Zinkoxidfilm) 2 auf einem Halbleitersubstrat 3 aus Silizium (Figur 1). Der Zinkoxidfilm 2 bildet zusammen mit den Elektrodenschichten 5 und 6 die Kondensatorstruktur 1. Zwischen der unteren Elektrodenschicht 5 und dem Zinkoxidfilm 2 ist eine amorphe dielektrische Schicht 4 aus Aluminiumoxid vorhanden. Die Zwischenschichtdicke 41 der Zwischenschicht 4 beträgt etwa 50 nm.

Die Kondensatorstruktur 1 wird zur Detektion einer Substanz eines Fluids 13 verwendet. Dazu ist die Kondensatorstruktur 1 zu einem piezoakustischen Dünnfilmresonator 10 ausgestaltet, der auf der Substratoberfläche 31 des Halbleitersubstrats 3 aufgebracht ist. Die Schichtdicke 21 des Zinkoxidfilms 2 beträgt ca. 0,8 µm. Die laterale Ausdehnung 11 des Resonators 10 beträgt ca. 100 µm.

Die Elektrodenschichten 5 und 6 sind an zwei voneinander abgekehrten Seiten des Zinkoxidfilms 2 angeordnet. Die Schichtdicke der unteren Elektrodenschicht 5 beträgt etwa 0,5 µm. Die Schichtdicke der oberen Elektrodenschicht 6 beträgt etwa 0,1 µm. Die untere Elektrodenschicht 5 ist aus Platin. Die obere Elektrodenschicht 6 ist aus Gold.

Der Zinkoxidfilm 2 besteht aus einer Vielzahl von Zinkoxid-Einkristallen. Die Zinkoxid-Einkristalle sind gegen die Substratoberfläche 31 des Halbleitersubstrats 3 verkippt. Somit ist der mit der Kondensatorstruktur 1 gebildete Resonator 10 zu Scherdickenschwingungen parallel zur Substratoberfläche 31 anregbar.

Der Resonator 10 verfügt über einen Oberflächenabschnitt 12, an dem eine Substanz eines Fluids 13 sorbiert werden kann. Dazu verfügt der Resonator 10 über eine chemisch sensitive Beschichtung 14. Die chemisch sensitive Beschichtung 14 ist auf der Elektrode 6 angebracht.

Um die Massensensitivität des Resonators 10 für eine bestimmte Substanz zu erhöhen, werden das Halbleitersubstrat 3 und der Resonator 10 mit Hilfe einer Einrichtung zur akustischen Isolation 15 akustisch voneinander isoliert. Gemäß dem vorliegenden Beispiel ist die Einrichtung 15 ein Bragg-Reflektor mit λ/4-dicken Schichten unterschiedlicher akustischer Impedanz.

Zum Herstellen der Kondensatorstruktur 1 werden folgende Verfahrensschritte durchgeführt (Figur 2): a) Bereitstellen des Substrats, b) Erzeugen der unteren Elektrodenschicht auf einer Substratoberfläche des Substrats, c) Erzeugen der amorphen Zwischenschicht auf der unteren Elektrodenschicht, d) Erzeugen der kristallinen dielektrischen Schicht mit Zinkoxid auf der Zwischenschicht und e) Erzeugen der oberen Elektrodenschicht auf der kristallinen dielektrischen Schicht mit Zinkoxid. Das Erzeugen der einzelnen Schichten erfolgt jeweils durch Dampfphasenabscheidung. Während des Abscheidens des Zinkoxidfilms 2 wird durch elektrisches Ansteuern der unteren Elektrodenschicht 5 ein elektrisches Feld mit Feldkomponenten erzeugt, die lateral zur Substratoberfläche 31 ausgerichtet sind. Es resultiert ein Zinkoxidfilm 2 mit Zinkoxid-Einkristallen, die eine bevorzugte Orientierung aufweisen. Die bevorzugte Orientierung zeichnet sich durch eine Verkippung der c-Achse der Zinkoxid-Einkristalle um etwa 16° gegen die Flächennormale der Substratoberfläche 31 aus.

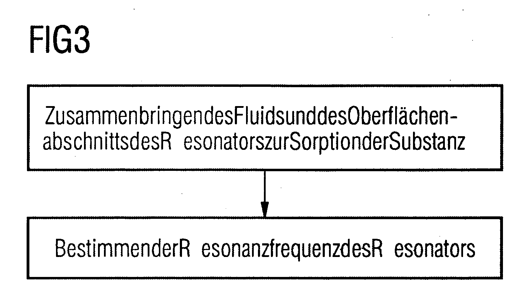

Die Kondensatorstruktur 1 bzw. der Resonator 10 wird zur Detektion einer Substanz eines Fluids 15 in Form einer Flüssigekeit verwendet. Zur Detektion der Substanz des Fluids 15 wird in einem ersten Schritt der chemisch sensitive Oberflächenabschnitt 12 des Resonators 10 und das Fluid 13 zusammengebracht (Figur 3). Das Fluid 13 und der Resonator 10 werden derart zusammengebracht, dass die Substanz des Fluids 13 auf dem Oberflächenabschnitt 12 des Resonators 10 sorbiert werden kann. Durch die Sorption ändert sich die Masse des Resonators 10. Durch nachfolgende Messung der Resonanzfrequenz des Resonators 10 kann auf die Art der Substanz und deren Konzentration im Fluid 13 geschlossen werden. Durch die Sorption der Substanz verändert sich die Resonanzfrequenz des Resonators 10 im Vergleich zur Resonanzfrequenz des Resonators 10, an dessen Oberflächenabschnitt 12 keine Substanz sorbiert ist. Um die Änderung der Resonanzfrequenz bestimmen zu können, wird ein Resonator 10 mit bekannter Resonanzfrequenz verwendet. In einer alternativen Ausführung wird vor dem Zusammenbringen des Fluids und des Resonators die Resonanzfrequenz des Resonators ohne sorbierte Substanz bestimmt.

## Patentansprüche

1. Kondensatorstruktur (1) zur Bildung eines piezoakustischen Resonators mit
- einer auf einer Substratoberfläche (31) eines Substrats (3) angeordneten unteren Elektrodenschicht (5),
- einer oberen Elektrodenschicht (6) und
- einer zwischen den Elektrodenschichten (5, 6) angeordneten, kristallinen dielektrischen Schicht mit Zinkoxid (2), die eine Vielzahl von Zinkoxid-Einkristallen mit jeweils einer polaren Kristallachse aufweist, wobei
- zwischen der unteren Elektrodenschicht (5) und der kristallinen dielektrischen Schicht mit Zinkoxid (2) eine amorphe dielektrische Zwischenschicht (4) angeordnet ist, und
- die polaren Kristallachsen der Zinkoxid-Einkristalle der dielektrischen Schicht gegen die Substratoberfläche (31) verkippt sind,
**dadurch gekennzeichnet, dass**
- die Zwischenschicht (4) eine aus dem Bereich von einschließlich 20 nm bis einschließlich 500 nm ausgewählte Zwischenschichtdicke (41) aufweist.

2. Kondensatorstruktur nach Anspruch 1, wobei die Zwischenschicht (4) zumindest ein aus der Gruppe Aluminiumoxid , Siliziumdioxid, Titandioxid und/oder Zirkoniumdioxid ausgewähltes keramisches Material aufweist.

3. Kondensatorstruktur nach Anspruch 1 oder 2, wobei die kristalline dielektrische Schicht mit Zinkoxid (2) eine aus dem Bereich von einschließlich 0,1 µm bis einschließlich 20 µm ausgewählte Schichtdicke (21) aufweist.

4. Kondensatorstruktur nach einem der Ansprüche 1 bis 3, wobei die untere Elektrodenschicht (5) ein aus der Gruppe Wolfram und/oder Platin ausgewähltes Elektrodenmaterial aufweist.

5. Kondensatorstruktur nach einem der Ansprüche 1 bits 4, wobei die obere Elektrodenschicht (6) ein aus der Gruppe Aluminium und/oder Gold ausgewähltes Elektrodenmaterial aufweist.

6. Kondensatorstruktur nach einem der Ansprüche 1 bis 5, wobei das Substrat (3) ein Halbleitersubstrat mit einem Halbleitermaterial ist.

7. Verfahren zum Herstellen der Kondensatorstruktur nach einem der Ansprüche 1 bis 6 mit den Verfahrensschritten:
a) Bereitstellen des Substrats (3),
b) Erzeugen der unteren Elektrodenschicht (5) auf einer Substratoberfläche (31) des Substrats (3),
c) Erzeugen der amorphen Zwischenschicht (4) auf der unteren Elektrodenschicht (5),
d) Erzeugen der kristallinen dielektrischen Schicht mit Zinkoxid (2) auf der Zwischenschicht (4) derart, dass die polaren Kristallachsen der Zinkoxid-Einkristalle gegenüber der Substratoberfläche (31) verkippt sind, und
e) Erzeugen der oberen Elektrodenschicht (6) auf der kristallinen dielektrischen Schicht mit Zinkoxid (4).

8. Verfahren nach Anspruch 7, wobei zum Erzeugen der unteren Elektrodenschicht (5), der amorphen Zwischenschicht (4), der kristallinen dielektrischen Schicht mit Zinkoxid (2) und/oder der oberen Elektrodenschicht (6) ein Abscheiden aus einer Dampfphase durchgeführt wird.

9. Verfahren nach Anspruch 8, wobei zum Erzeugen der kristallinen dielektrischen Schicht (2) ein Abscheiden von Zinkoxid aus der Dampfphase durchgeführt wird und während des Abscheidens des Zinkoxids ein elektrisches Feld erzeugt wird, das bezüglich einer Flächennormalen der unteren Elektrodenschicht (5) verkippt ist.

10. Verwendung der Kondensatorstruktur nach einem der Ansprüche 1 bis 6 als piezoakustischen Resonator, wobei die kristalline dielektrische Schicht mit Zinkoxid (2) eine piezoelektrische Schicht des Resonators (10) bildet und die piezoelektrische Schicht (2) und die Elektrodenschichten (5, 6) derart aneinander angeordnet werden, dass eine elektrische Ansteuerung der Elektrodenschichten (5, 6) zu einer Schwingung des Resonators (10) mit einer bestimmten Resonanzfrequenz führt.

11. Verwendung nach Anspruch 10, wobei die Resonanzfrequenz der Schwingung aus dem Bereich von einschließlich 500 MHz bis einschließlich 10 GHz ausgewählt wird.

12. Verwendung nach Anspruch 10 oder 11 zur Detektion mindestens einer Substanz eines Fluids (13), wobei folgende Verfahrensschritte durchgeführt werden:
a) Zusammenbringen eines Fluids (13) und des piezoakustischen Resonators (10) derart, dass eine Substanz des Fluids am Oberflächenabschnitt (12) des Resonators (10) sorbiert werden kann, und
a) Bestimmen einer Resonanzfrequenz des Resonators (10), wobei aus der Resonanzfrequenz auf die am Oberflächenabschnitt (12) sorbierte Menge der Substanz geschlossen wird.

13. Verwendung nach Anspruch 12, wobei ein Oberflächenabschnitt (12) zur Sorption einer Substanz eines Fluids (13) derart am Resonator (10) angeordnet wird, dass die Resonanzfrequenz des Resonators (10) abhängig ist von einer am Oberflächenabschnitt (12) sorbierten Menge der Substanz.

14. Verwendung nach Anspruch 12 oder 13, wobei der Oberflächenabschnitt (12) zur Sorption der Substanz des Fluids (13) von einer chemisch sensitiven Beschichtung (14) des Resonators (10) gebildet ist.

15. Verfahren nach einem der Ansprüche 12 bis 14, wobei die Resonanzfrequenz in Gegenwart des Fluids 13 bestimmt wird.

## Claims

1. Capacitor structure (1) for forming a piezo-acoustic resonator, comprising
- a lower electrode layer (5) arranged on a substrate surface (31) of a substrate (3),
- an upper electrode layer (6) and
- a crystalline zinc oxide-containing dielectric layer (2) arranged between the electrode layer (5, 6), which has a plurality of zinc oxide single crystals with a polar crystal axis in each instance, with
- an amorphous dielectric intermediate layer (4) being interposed between the lower electrode (5) and the crystalline zinc oxide-containing dielectric layer (2), and
- the polar crystal axes of the zinc oxide single crystals of the dielectric layer being tipped relative to the substrate surface (31),
**characterised in that**
- the intermediate layer (4) comprises an intermediate layer thickness (41) selected from the range of exclusively 20 nm to exclusively 500nm.

2. Capacitor structure according to claim 1,
with the intermediate layer (4) at least comprising a ceramic material selected from the aluminium oxide, silicon dioxide, titanium dioxide and/or zirconium dioxide group.

3. Capacitor structure according to claim 1 or 2,
with the crystalline zinc oxide-containing dielectric layer (2) comprising a layer thickness (21) selected from the range of exclusively 0.1 µm to exclusively 20µm.

4. Capacitor structure according to one of claims 1 to 3, with the lower electrode layer (5) comprising an electrode material selected from the wolfram and/or platinum group.

5. Capacitor structure according to one of claims 1 to 4, with the upper electrode layer (6) comprising an electrode material selected from the aluminium and/or gold group.

6. Capacitor structure according to one of claims 1 to 5, with the substrate (3) being a semiconductor substrate with a semiconductor material.

7. Method for producing the capacitor structure according to one of claims 1 to 6 having the method steps:
a) providing the substrate (3)
b) producing the lower electrode layer (5) on a substrate surface (31) of the substrate (3)
c) producing the amorphous intermediate layer (4) on the lower electrode layer (5)
d) producing the crystalline zinc oxide-containing dielectric layer (2) on the intermediate layer (4), such that the polar single crystal axes of the zinc oxide single crystals are tipped relative to the substrate surface (31), and
e) producing the upper electrode layer (6) on the crystalline zinc oxide-containing dielectric layer (4).

8. Method according to claim 7, with a deposition being carried out from a vapour phase in order to produce the lower electrode layer (5), the amorphous intermediate layer (4), the crystalline zinc oxide-containing dielectric layer (2) and/or the upper electrode layer (6).

9. Method according to claim 8, with a deposition of zinc oxide from the vapour phase being carried out in order to produce the crystalline dielectric layer (2) and an electrical field being generated during the deposition of the zinc oxide, said electrical field being tipped in respect of a normal of the surface of the lower electrode layer (5).

10. Use of the capacitor structure according to one of claims 1 to 6 as a piezo-acoustic resonator, with the crystalline zinc oxide-containing dielectric layer (2) forming a piezo-electric layer of the resonator (10) and the piezo-electric layer (2) and the electrode layers (5, 6) being arranged next to one another such that an electrical control of the electrode layers (5, 6) results in the resonator (10) vibrating at a specific resonance frequency.

11. Use according to claim 10, with the resonance frequency of the vibration being selected from the range of exclusively 500 MHz to exclusively 10 GHz.

12. Use according to claim 10 or 11 for detecting at least one substance of a fluid (13), with the following method steps being carried out:
a) combining a fluid (13) and the piezo-acoustic resonator (10) such that a substance of the fluid is able to be sorbed on the surface segment (12) of the resonator (10) and
b) determining a resonance frequency of the resonator (10), with the quantity of substance sorbed on the surface segment (12) being concluded from the resonance frequency.

13. Use according to 12, with a surface segment (12) for sorbing a substance of a fluid (13) being arranged on the resonator (10) such that the resonance frequency of the resonator (1) is dependent on a quantity of substance sorbed on the surface segment (12).

14. Use according to claim 12 or 13, with the surface segment (12) being formed to sorb the substance of the fluid (13) from a chemically sensitive coating (14) of the resonator (10).

15. Method according to one of claims 12 to 14, with the resonance frequency being determined in the presence of the fluid 13.

## Revendications

1. Structure de condensateur (1) pour former un résonateur piézoacoustique, comprenant :
- une couche d'électrode inférieure (5) située sur une surface de substrat (31) d'un substrat (3),
- une couche d'électrode supérieure (6) et
- une couche diélectrique cristalline contenant de l'oxyde de zinc (2) située entre les couches d'électrode (5, 6) , qui comprend une pluralité de monocristaux d'oxyde de zinc pourvus à chaque fois d'un axe de cristal polaire,
- une couche intermédiaire diélectrique amorphe (4) étant située entre la couche d'électrode inférieure (5) et la couche diélectrique cristalline contenant l'oxyde de zinc (2) et
- les axes de cristal polaires des monocristaux d'oxyde de zinc de la couche diélectrique étant inclinés par rapport à la surface de substrat (31),
**caractérisée en ce que**
- la couche intermédiaire (4) possède une épaisseur de couche intermédiaire (41) choisie d'un ordre de grandeur allant de 20 nm inclus à 500 nm inclus.

2. Structure de condensateur selon la revendication 1, la couche intermédiaire (4) comprenant au moins un matériau céramique choisi dans le groupe comprenant l'oxyde d' aluminium, le dioxyde de silicium, le dioxyde de titane et/ou le dioxyde de zirconium.

3. Structure de condensateur selon la revendication 1 ou 2, la couche diélectrique cristalline contenant 1"oxyde de zinc (2) possédant une épaisseur de couche (21) choisie d'un ordre de grandeur allant de 0,1 µm inclus à 20 µm inclus.

4. Structure de condensateur selon l'une des revendications 1 à 3, la couche d'électrode inférieure (5) comprenant un matériau d'électrode choisi dans le groupe comprenant le wolfram et/ou le platine.

5. Structure de condensateur selon l'une des revendications 1 à 4, la couche d'électrode supérieure (6) comprenant un matériau d'électrode choisi dans le groupe comprenant l'aluminium et/ou l'or.

6. Structure de condensateur selon l'une des revendications 1 à 5, le substrat (3) étant un substrat semi-conducteur comprenant un matériau semi-conducteur.

7. Procédé de fabrication de la structure de condensateur selon l'une des revendications 1 à 6, comprenant les étapes de procédé :
a) préparation du substrat (3),
b) formation de la couche d'électrode inférieure (5) sur une surface de substrat du substrat (3),
c) formation de la couche intermédiaire amorphe (4) sur la couche d'électrode inférieure (5),
d) formation de la couche diélectrique cristalline contenant l'oxyde de zinc (2) sur la couche intermédiaire (4) de manière à ce que les axes de cristal polaires des monocristaux d'oxyde de zinc soient inclinés par rapport à la surface de substrat (31) et
e) formation de la couche d'électrode supérieure (6) sur la couche diélectrique cristalline contenant l'oxyde de zinc (2).

8. Procédé selon la revendication 7, un dépôt en phase vapeur étant exécuté pour former la couche d'électrode inférieure (5), la couche intermédiaire amorphe (4), la couche diélectrique cristalline contenant l'oxyde de zinc (2) et/ou la couche d'électrode supérieure (6).

9. Procédé selon la revendication 8, un dépôt d'oxyde de zinc en phase vapeur étant exécuté pour former la couche diélectrique cristalline (2) et un champ électrique qui est incliné par rapport à une normale à la surface de la couche d'électrode inférieure (5) étant généré pendant le dépôt de l'oxyde de zinc.

10. Utilisation de la structure de condensateur selon l'une des revendications 1 à 6 en tant que résonateur piézoacoustique, la couche diélectrique cristalline contenant l'oxyde de zinc (2) formant une couche piézoélectrique du résonateur (10) et la couche piézoélectrique (2) et les couches d'électrode (5, 6) étant disposées les unes sur les autres de manière à ce qu'une commande électrique des couches d'électrode (5, 6) provoque une oscillation du résonateur (10) à une fréquence de résonance déterminée.

11. Utilisation selon la revendication 10, la fréquence de résonance de l'oscillation étant choisie dans la plage allant de 500 MHz inclus à 10 GHz inclus.

12. Utilisation selon la revendication 10 ou 11 pour détecter au moins une substance d'un fluide (13), les étapes de procédé suivantes étant exécutées :
a) mise en contact d'un fluide (13) et du résonateur piézoacoustique (10) de manière à ce qu'une substance du fluide puisse être absorbée au niveau de la portion de surface (12) du résonateur (10) et
b)détermination d'une fréquence de résonance du résonateur (10), la quantité de substance absorbée au niveau de la portion de surface (12) étant déduite de la fréquence de résonance.

13. Utilisation selon la revendication 12, une portion de surface (12) pour l'absorption d'une substance d'un fluide (13) étant disposée sur le résonateur (10) de manière à ce que la fréquence de résonance du résonateur (10) dépende d'une quantité absorbée de la substance au niveau de la portion de surface (12).

14. Utilisation selon la revendication 12 ou 13, la portion de surface (12) pour l'absorption de la substance du fluide (13) étant formée par un revêtement (14) chimiquement sensible du résonateur (10).

15. Procédé selon l'une des revendications 12 à 14, la fréquence de résonance étant déterminée en présence du fluide (13).
